# EUROPEAN PATENT APPLICATION

(11) **EP 4 544 970 A1**
(43) Date of publication of application: **30.04.2025**
(21) Application number: 23827438.5
(22) Date of filing: 15.06.2023
(51) Int. Cl.: A47J 43/08, A47J 43/07, A47J 19/02, A47J 19/06

(54) **DRIVING DEVICE THAT ROTATES SINGLE OUTPUT SHAFT AT HIGH OR LOW SPEED, AND JUICER THAT CAN BE USED AS BLENDER AND THAT USES SAME DRIVING DEVICE**

(30) Priority: 22.06.2022 KR 20220001530 U
(71) Applicant: Hurom Co., Ltd., Gimhae-si, Gyeongsangnam-do 50969 (KR)
(72) Inventor: KIM, Hyanggon, Gimhae-si Gyeongsangnam-do 50978 (KR)
(74) Representative: dompatent von Kreisler Selting Werner - Partnerschaft von Patent- und Rechtsanwälten mbB
(86) International application number: PCT/KR2023/008240
(87) International publication number: WO 2023/249319

(57) **Abstract**

The present disclosure relates to a drive device that rotates a single output shaft at high or low speed and juicer combined with mixer using said drive device, and the drive device that rotates a single output shaft at high or low speed according to the present disclosure is characterized to include a drive motor, a clutch that moves up-down, and when moving downward, is engaged to a rotor shaft top gear formed on a motor shaft of the drive motor, to rotate together with the motor shaft; an output shaft whose lower end part is engaged to an upper end part of the clutch to rotate together with the clutch; an output shaft gear that is inserted into the output shaft to rotate, and when the clutch moves upward, is engaged with the clutch to rotate together with the clutch; a rotor shaft gear that is inserted into the motor shaft to rotate together with the motor shaft, and is elastically supported so that when the clutch moves downward, contacts with the clutch, to move downward; and a reduction gear that is gear-engaged between the rotor shaft gear and the output shaft gear, to decelerate a rotational speed of the output shaft gear compared to a rotational speed of the motor shaft.

## Description

### 1. Field

The present disclosure relates to a drive device that rotates a single output shaft at high or low speed and juicer combined with mixer using said drive device, and more particularly, to a drive device that rotates a single output shaft at high or low speed so that a juicer for crushing and pressing ingredients such as vegetables or fruits using a screw that rotates at low speed to generate squeezed juice and a mixer for shredding and mixing ingredients using a rotating blade that rotates at high speed may be used together, and the juicer combined with mixer using said drive device.

### 2. Background

In general, a mixer is a device that grinds and mixes food ingredients such as vegetables, fruits and grains using a rotating blade (mixer blade) that rotates at high speed, and a juicer is a home device that makes juice by pressing and squeezing vegetables and fruits using the principle as if grinding beans with a millstone and pressing and squeezing them, in a method of crushing and compressing the ingredients between a drum and a screw that rotates at low speed.

The two devices have similar operations of rotating the mixer blade or the screw using a motor, and thus it is possible to combine them into one device and manufacture a combined use device, but there is a problem that the mixer blade has to rotate at high speed whereas the screw has to rotate at low speed.

Korean Patent Registration No. 1994357 discloses a drive device where a high speed shaft that rotates at high speed and a low speed shaft that rotates at low speed are formed as a dual shaft so as to be used in both a mixer and a juicer. However, if the high speed shaft and the lower speed shaft are formed as a dual shaft, interference between the two shafts may cause noise and waterproofing problems, etc.

### SUMMARY

Therefore, a purpose of the present disclosure is to resolve the aforementioned problems of prior art, that is to provide a drive device that rotates a single output shaft at high or low speed so as to use a juicer or mixer together by rotating the single output shaft at high speed or low speed using a single motor that rotates at high speed, enabling to use the juicer or mixer together, and juicer combined with mixer using said drive device.

The problems to be solved by the present disclosure are not limited to the problems mentioned above, and other problems not mentioned will be clearly understood by those skilled in the related art from the description below.

The aforementioned purpose may be achieved according to the present disclosure by a drive device that rotates a single output shaft at high or low speed, the drive device including a drive motor; a clutch that moves up-down, and when moving downward, engages with a rotor shaft top gear formed on a motor shaft of the drive motor, to rotate together with the motor shaft; an output shaft whose lower end part is engaged with an upper end part of the clutch to rotate together with the clutch; an output shaft gear that is inserted into the output shaft to rotate, and when the clutch moves upward, engages with the clutch to rotate together with the clutch; a rotor shaft gear that is inserted into the motor shaft to rotate together with the motor shaft, and is elastically supported so that when the clutch moves downward, contacts with the clutch, to move downward; and a reduction gear that is gear-engaged between the rotor shaft gear and the output shaft gear, to reduce a rotational speed of the output shaft gear compared to a rotational speed of the motor shaft, wherein, when the clutch moves downward, the rotor shaft top gear and the clutch are engaged, the gear-engagement between the rotor shaft gear and the reduction gear is disengaged, and the engagement between the output shaft gear and the clutch is disengaged, so that high speed rotation of the motor shaft is transmitted to the clutch and the output shaft, to rotate the output shaft at high speed, and when the clutch moves upward, the engagement between the rotor shaft top tear and the clutch is disengaged, the rotor shaft gear and the reduction gear are gear-engaged, and the output shaft gear and the clutch are engaged, so that the high speed rotation of the motor shaft is decelerated by the reduction gear, to rotate the output shaft gear and the rotation of the output shaft gear is transmitted to the clutch and the output shaft, to rotate the output shaft at a lower speed than the motor shaft.

Here, the drive device may further include a clutch up-down movement part that moves the clutch up-down.

Here, the clutch up-down movement part may include a clutch case that is engaged with the clutch; and an up-down drive part that is connected to one side of the clutch case, to move the clutch case up-down.

Here, the drive device may further include a spring that elastically supports a lower side of the rotor shaft gear.

Here, the drive device may further include a bearing disposed between the output shaft and the output shaft gear.

Here, the drive device may further include a housing that accommodates therein the drive motor, the clutch, the output shaft gear, the rotor shaft gear, and the reduction gear, and an upper end part of the output shaft may protrude above the housing.

Here, the reduction gear may include a first reduction gear that gear-engages with the rotor shaft gear, and a second reduction gear that gear-engages between the first reduction gear and the output shaft gear.

Here, the first reduction gear and the second reduction gear may be formed in two stages, with a first gear train formed on a circumference with a small radius and a second gear train formed on a circumference with a large radius, and the second gear train of the first reduction gear may gear-engage with the rotor shaft gear, causing decelerated rotation, the second gear train of the second reduction gear may gear-engage with the first gear train of the first reduction gear, causing decelerated rotation, and the output shaft gear may gear-engage with the first gear train of the second reduction gear, causing decelerated rotation.

In addition, the aforementioned purpose may be achieved according to the present disclosure by a drive device that rotates a single output shaft at high or low speed, the drive device including a drive motor; a rotor shaft gear that is inserted into a motor shaft of the drive motor to rotate together with the motor shaft, and is elastically supported to move up-down; an output shaft that moves up-down above the motor shaft, and when moving downward, is engaged with a rotor shaft top gear formed on the motor shaft to rotate together with the motor shaft and move the rotor shaft gear downward; an output shaft gear that is inserted into the output shaft to rotate, and when the output shaft moves upward, is engaged with the output shaft to rotate the output shaft together; and a reduction gear that is gear-engaged between the rotor shaft gear and the output shaft gear to reduce a rotational speed of the output shaft gear compared to a rotational speed of the motor shaft, wherein, when the output shaft moves downward, the output shaft is engaged with the rotor shaft top gear, the gear-engagement between the rotor shaft gear and the reduction gear is disengaged, the engagement between the output shaft and the output shaft gear is disengaged, so that high speed of the motor shaft is transmitted to the output shaft, to rotate the output shaft at high speed, and when the output shaft moves upward, the output shaft is disengaged with the rotor shaft top gear, the rotor shaft gear and the reduction gear are gear-engaged, and the output shaft and the output shaft gear are engaged, so that the high speed rotation of the motor shaft is decelerated by the reduction gear, to rotate the output shaft gear and the rotation of the output shaft gear is transmitted to the output shaft, to rotate the output shaft at a lower speed than the motor shaft.

Here, the drive device may further include an output shaft pulley to which, when an upper module that accommodates therein a rotation mechanism that rotates by power received from the output shaft is engaged above the drive device, a rotation shaft of the rotation mechanism is engaged, and that is engaged with an upper end part of the output shaft, wherein the rotation shaft pressurizes the output shaft pulley to move the output shaft downward.

Here, a hollow of the output shaft gear to which the output shaft is inserted is formed with a step such that a lower end part has a larger diameter than an upper end part, and the upper end part of the hollow has an output shaft engagement part to which an intermediate engagement part formed on an intermediate part of the output shaft is inserted and engaged when the output shaft moves upward.

Here, a gear train is formed on an outer surface of the intermediate engagement part and on an inner surface of the output shaft engagement part, or a key projection or a key groove is formed on the outer surface of the intermediate engagement part, and a key groove corresponding to the key projection formed on the outer surface of the intermediate engagement part or a key projection corresponding to the key groove formed on the outer surface of the intermediate engagement part may be formed on the output shaft engagement part.

The drive device may further include a spring that elastically supports a lower side of the rotor shaft gear.

Here, the drive device may further include a bearing disposed between the output shaft and the output shaft gear.

Here, the bearing may be disposed on an inner side or outer side of a lower end part of the output shaft gear, and the drive device may further include a spring that is disposed inside the output shaft gear between the bearing and a step formed on an intermediate part of the output shaft, to elastically support the output shaft.

Here, the drive device may further include a housing that accommodates therein the drive motor, the output shaft gear, the rotor shaft gear, and the reduction gear, and an upper end part of the output shaft may protrude above the housing.

Here, the reduction gear may include a first reduction gear that gear-engages with the rotor shaft gear and a second reduction gear that gear-engages between the first reduction gear and the output shaft gear.

Here, the first reduction gear and the second reduction gear may be formed in two stages, with a first gear train formed on a circumference with a small radius and a second gear train formed on a circumference with a large radius, and the second gear train of the first reduction gear may gear-engage with the rotor shaft gear, causing decelerated rotation, and the second gear train of the second reduction gear may gear-engage with the first gear train of the first reduction gear, causing decelerated rotation, and the output shaft gear may gear-engage with the first gear train of the second reduction gear, causing decelerated rotation.

Here, a motor shaft engagement guide having peaks and valleys in the shaft direction along a circumferential direction may be formed on an upper part of the rotor shaft gear, and an output shaft engagement guide having peaks and valleys in the shaft direction along a circumferential direction may be formed on a lower part of the output shaft to correspond to the motor shaft engagement guide.

Here, a gear tooth of the rotor shaft gear and a gear tooth of the reduction gear that is gear-engaged with a gear of the rotor shaft gear may be formed to be inclined with respect to the shaft direction.

Here, the gear tooth of the rotor shaft gear and the gear tooth of the reduction gear that is gear-engaged with the rotor shaft gear may have an inclination angle within 5° with respect to the shaft direction.

In addition, the aforementioned purpose may be achieved according to the present disclosure by a juicer combined with mixer, including a drive device according to any one of the aforementioned, a mixer module including a rotating blade that rotates at high speed by power received from the output shaft, and that is installed above the drive device; and a juicing module including a screw that rotates at low speed by power received from the output shaft, and that is installed in place of the mixer module above the drive device.

According to the present disclosure as aforementioned, high speed or low speed is realized with a single output shaft, and thus there is an advantage to resolve noise and waterproofing that occurs when implementing high speed with low speed with a conventional dual shaft.

Further, there is also an advantage that it is possible to configure a drive device that drives an output shaft at high speed or low speed using a motor rotating at high speed, enabling use of mixer and juicer combined.

### BRIEF DESCRIPTION OF THE DRAWINGS

FIG. 1 is a perspective view of a drive device that rotates a single output shaft at high or low speed according to an embodiment of the present disclosure.
FIG. 2 is a perspective view illustrating an internal configuration of FIG. 1.
FIG. 3 and FIG. 4 illustrate an engagement structure in a state where the clutch of FIG. 2 moved upward and downward, respectively.
FIG. 5 and FIG. 6 are views illustrating operations in low speed mode and high speed mode, respectively.
FIG. 7 is a perspective view of a drive device that rotates a single output shaft at high or low speed according another embodiment of the present disclosure.
FIG. 8 is a perspective view illustrating an internal configuration of FIG. 7.
FIG. 9 and FIG. 10 are views illustrating operations in low speed mode and high speed mode, respectively.
FIG. 11 illustrates a case where a juicer combined with mixer according to an embodiment of the present disclosure is used as a juicer.
FIG. 12 illustrates a case where a juicer combined with mixer according to an embodiment of the present disclosure is used as a mixer.
FIG. 13 illustrates an engagement state of an output shaft and an output shaft gear according to another embodiment of the present disclosure.
FIG. 14 illustrates a drive device according to another embodiment of the present disclosure.
FIG. 15 is an enlarged view of the key part of FIG. 14.

### DETAILED DESCRIPTION

Specific details of the embodiments are included in the detailed description and drawings.

The advantages and features of the present disclosure and methods for achieving them will become clear by referring to the embodiments described in detail below along with the accompanying drawings. However, the present disclosure is not limited to the embodiments disclosed below, but may be implemented in various different forms, and the present embodiments are merely provided to ensure that the disclosure of the present disclosure is complete and to fully inform the scope of the present disclosure to those with ordinary knowledge in the technical field that the present disclosure pertains to.

Like reference numerals indicate like components throughout the entirety of specification.

Hereinbelow, the present disclosure will be described with reference to the drawings for describing a drive device that rotates a single output shaft at high or low speed and juicer combined with mixer using said drive device according to the embodiments of the present disclosure.

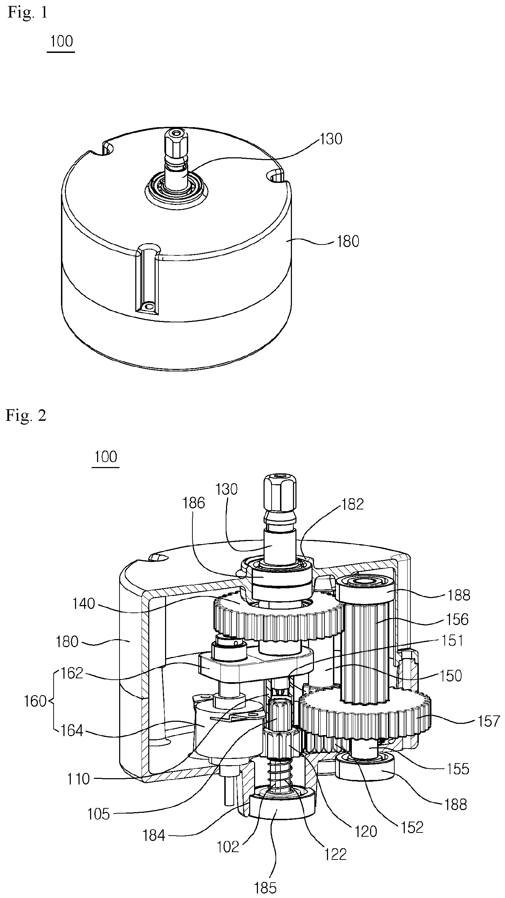

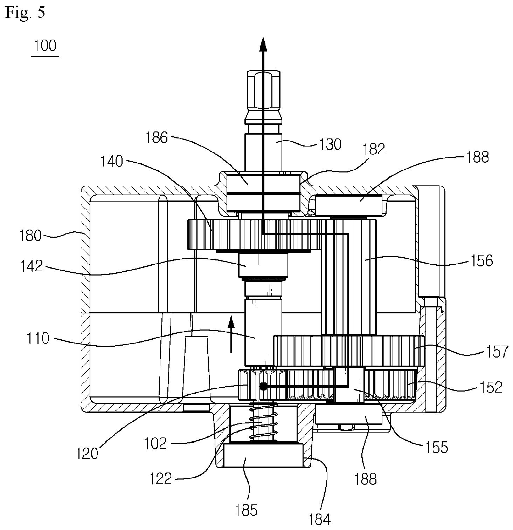

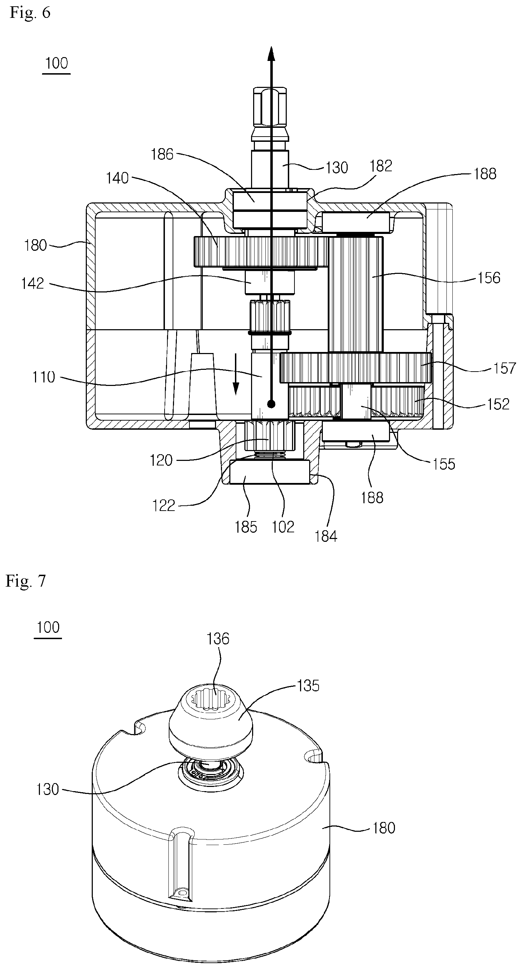

FIG. 1 is a perspective view of a drive device that rotates a single output shaft at high or low speed according to an embodiment of the present disclosure, FIG. 2 is a perspective view illustrating an internal configuration of FIG. 1, FIG. 3 and FIG. 4 illustrate an engagement structure in a state where the clutch of FIG. 2 moved upward and downward, respectively, and FIG. 5 and FIG. 6 are views illustrating operations in low speed mode and high speed mode, respectively.

A drive device 100 that rotates a single output shaft at high or low speed according to an embodiment of the present disclosure may be configured to include a drive motor (not illustrated), a clutch 110, a rotor shaft gear 120, an output shaft 130, an output shaft gear 140, and a reduction gear 150, 155.

The rotor shaft gear 120, the clutch 110, the output shaft 130, the output shaft gear 140, and the reduction gear 150, 155 that constitute the drive device 100 according to the present disclosure may be arranged inside a housing 180, and an upper end part of the output shaft 130 protrudes above the housing 180 through an output shaft through hole 182 above the housing 180. In the drawings, the drive motor is arranged below the illustrated housing 180 (in the drawings, only a motor shaft 102 that extends above from the drive motor is illustrated as being inside the housing 180), but the drive motor may be formed to be disposed inside the housing 180 together with the above-listed components. Further, the drive motor may be arranged inside a different housing that is not illustrated herein besides the illustrated housing 180.

The drive motor may be a rotary motor that generates power for rotating the output shaft 130 at high or low speed. In this embodiment, the drive motor may be a motor that rotates only at high speed without speed adjustment.

The motor shaft 102 of the drive motor may be inserted inside the housing 180 through a motor shaft through hole 184 below the housing 180. Here, a bearing 185 may be disposed between the motor shaft through hole 184 and the motor shaft 102.

A rotor shaft top gear 105 may be formed on an upper end part of the motor shaft 102. When the clutch moves up-down, the rotor shaft top gear 105 may engage with or disengage with the clutch 110, so that, by the rotor shaft top gear 105, a rotational force of the motor shaft 102 is directly transmitted to the clutch 110 or direct transmission is released. The rotor shaft top gear 105 may be formed integrally with the motor shaft 102 or may be formed separately.

The rotor shaft gear 120 may be inserted into the motor shaft 102 to rotate together with the motor shaft 102 and be elastically supported at a lower part, to move up-down along the motor shaft 102. In order for the rotor shaft gear 120 to move up-down along the motor shaft 102 and rotate together with the motor shaft 102, an inner surface of an insertion hole of the rotor shaft gear 120 may be formed as a polygonal hole and an outer surface of the motor shaft 102 may be formed as a corresponding polygonal shaft. Alternatively, on the inner surface of the insertion hole of the rotor shaft gear 120 and the outer surface of the motor shaft 102, a gear train having an up-down straight line shape may be formed in a circumferential direction, enabling gear-engagement.

Between a lower surface of the rotor shaft gear 120 and the bearing 185, a spring 122 may be disposed to elastically support the rotor shaft gear 120. As will be described later, when the clutch 110 that moves up-down above the motor shaft 102 moves downward, a lower end of the clutch 110 contacts with an upper end of the rotor shaft gear 120, so that the rotor shaft gear 120 may move downward along the motor shaft 102. Here, elastic force may be stored in the spring 122 that supports a lower part of the rotor shaft gear 120. Further, when the clutch 110 moves upward, the rotor shaft gear 120 may return upward due to the elastic force of the spring 122.

The clutch 110 moves up-down, and when the clutch 110 moves downward, the clutch 110 may be engaged with the motor shaft 102 and directly receive power of the motor shaft 102. When the clutch 110 moves upward, the engagement with the motor shaft 102 is disengaged, and thus power is not directly received from the motor shaft 102, but the rotational force of the motor shaft 102 may be received through the reduction gear 150, 155 and the output shaft gear 140 as will be described later.

The clutch 110 may be formed in a shaft shape having a hollow. At an intermediate part of the clutch 110, a motor shaft engagement part 112 may be formed, into which the rotor shaft top gear 105 is inserted and engaged. As the clutch 110 moves downward and rotor shaft top gear 105 engages to the motor shaft engagement part 112 to transmit the rotational force of the motor shaft 102 to the clutch 110, a gear tooth arranged in an up-down straight line along the circumferential direction may be formed on the inner surface of the motor shaft engagement part 112 and the outer surface of the rotor shaft top gear 105, enabling gear-engagement.

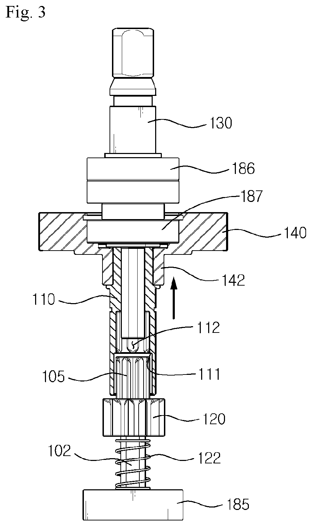

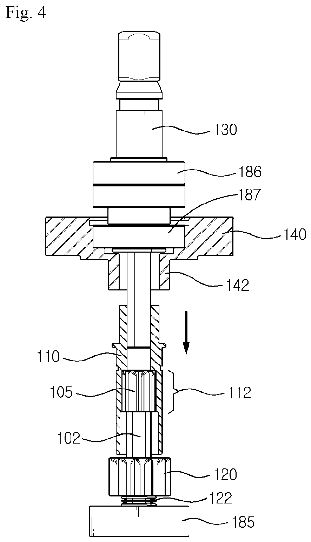

A hollow below the motor shaft engagement part 112 is formed with a diameter larger than that of the motor shaft engagement part 112, enabling the formation of a step 111. As illustrated in FIG. 3, in a state where the clutch 110 moved upward, the rotor shaft top gear 105 is positioned below the step 111 and does not engage with the clutch 110. Conversely, when the clutch 110 moves downward, as illustrated in FIG. 4, the rotor shaft top gear 105 is inserted into the motor shaft engagement part 112, enabling it to be engaged and thereby directly transmitting the rotational force of the motor shaft 102 to the clutch 110.

An upper end part of the clutch 110 may be inserted into or disengaged from the clutch engagement part 142 formed on a lower end part of the output shaft gear 140, as will be described later. When the clutch 110 moves upward, the upper end part of the clutch 110 is inserted into the clutch engagement part 142 of the output shaft gear 140, enabling it to receive the rotational force of the output shaft gear 140 and rotate together with the output shaft gear 140. To enable the upper end part of the clutch 110 to move upward and engage with the clutch engagement part 142, thereby transferring the rotational force of the output shaft gear 140 to the clutch 110, a gear train having an up-down straight line shape may be formed along the circumferential direction on an outer surface of the upper end part of the clutch 110 and an inner surface of the clutch engagement part 142, to enable gear-engagement.

A lower end part of the output shaft 130 may be inserted into and be engaged with the hollow on the upper end part of the clutch 110. Here, although the insertion depth of the lower end part of the output shaft 130 may vary according to the up-down movement of the clutch 110, the engagement between the clutch 110 and the output shaft 130 is not disengaged. To enable the clutch 110 to move up-down along the lower end part of the output shaft 130 and to transfer the rotational force of the clutch 110 to the output shaft 130, an inner surface of the upper end part of the clutch 110 may be formed as a polygonal hole, while an outer surface of the lower end part of the output shaft 130 may be formed as a corresponding polygonal shaft. Alternatively, the inner surface of the upper end part of the clutch 110 and the outer surface of the lower end part of the output shaft 130 may be formed with a gear train of an up-down straight line shape along the circumferential direction, and be gear-engaged.

The clutch up-down movement part 160 moves the clutch 110 up-down. The clutch up-down movement part 160 may be configured to include a clutch case 162 and an up-down drive part 164. Using the up-down drive part 164, the clutch 110 may be moved up-down automatically. The clutch case 162 may be fixedly coupled to the clutch 110. The clutch case 162 extends to one lateral side of the clutch 110, and the up-down drive part 164 may be connected to one side of the extension. The up-down drive part 164 is connected to one side of the clutch case 162 and may move the clutch case 162 up-down. For example, the up-down drive part 164 may be configured as a known motor, such as a linear motor 164. The up-down drive part 164 may also be configured as a rotary motor (not illustrated) and a screw formed on a motor shaft of the rotary motor, enabling the clutch case 162 to move up-down along with the screw according to the rotation direction of the motor.

The upper end part of the output shaft 130 protrudes above the housing 180, and a rotation shaft of a rotation mechanism that receives the rotational force of the output shaft 130 may be engaged to its upper end part. The rotation mechanism may be a rotating blade of a mixer or a screw of a juicer, but is not necessarily limited to these. The upper end part of the output shaft 130 may be formed as a polygonal shaft or polygonal hole to be engaged with the rotation shaft of the rotation mechanism, enabling power transmission. For reference, the drawings illustrate a polygonal shaft.

The lower end part of the output shaft 130 is inserted into the hollow of the clutch 110. Alternatively, this may be configured in the opposite way, meaning that this may be configured such that the upper end part of the clutch 110 is inserted into the lower end part of the output shaft 130. The insertion depth may vary according to the up-down movement of the clutch 110. A bearing 186 may be disposed between the output shaft through hole 182 on an upper part of the housing 180 and the output shaft 130.

The output shaft gear 140 has a hollow formed that allows it to be inserted into the output shaft 130 and to rotate. When the clutch 110 moves upward, the clutch 110 is engaged to the clutch engagement part 142 at a lower end part, which enables the transmission of the rotational force of the output shaft gear 140 to the clutch 110. As will be described later, the output shaft gear 140 may rotate at low speed as it is decelerated by the reduction gear 150, 155, and the rotational force of the output shaft gear 140 may be transmitted to the clutch 110 and the output shaft 130 engaged to the clutch 110, thereby rotating the output shaft 130 at low speed. As illustrated in FIG. 3 and FIG. 4, a bearing 187 may be disposed between the output shaft gear 140 and the output shaft 130.

The reduction gear 150, 155 may be gear-engaged between the rotor shaft gear 120 and the output shaft gear 140, and may decelerate the rotational speed of the output shaft gear 140 compared to the rotational speed of the rotor shaft gear 120, which is engaged to the motor shaft 102 and rotates together.

In order to adjust the reduction ratio when necessary, the reduction gear 150, 155 may be formed as a plurality of reduction gears 150, 155. In this embodiment, the first reduction gear 150 and the second reduction gear 155 are adopted, which allows the rotational speed of the motor shaft 102 to be decelerated by the two reduction gears 150, 155.

The first reduction gear 150 is gear-engaged between the rotor shaft gear 120 and the second reduction gear 155, while the second reduction gear 155 may be gear-engaged between the first reduction gear 150 and the output shaft gear 140. Here, both the first reduction gear 150 and the second reduction gear 155 may be formed as a two-stage gear train, consisting of a first gear train 151, 156 formed on a small radius circumference and a second gear train 152, 157 formed on a large radius circumference. As illustrated, the second gear train 152 of the first reduction gear 150 may be gear-engaged to the rotor shaft gear 120. Therefore, according to the gear ratio between the rotor shaft gear 120 and the second gear train 152 of the first reduction gear 150, the first reduction gear 150 may rotate at a decelerated speed compared to the rotor shaft gear 120. Additionally, the first gear train 151 of the first reduction gear 150 may be gear-engaged with the second gear train 157 of the second reduction gear 155. Therefore, due to the gear ratio between the first gear train 151 of the first reduction gear 150 and the second gear train 157 of the second reduction gear 155, the second reduction gear 155 may rotate at an additional decelerated speed compared to the first reduction gear 150. Further, the first gear train 156 of the second reduction gear 155 may be gear-engaged with the output shaft gear 140. Therefore, due to the gear ratio between the first gear train 156 of the second reduction gear 155 and the output shaft gear 140, the output shaft gear 140 may rotate at an additional decelerated speed compared to the second reduction gear 155.

Upper end part and lower end part of the first reduction gear 150 and the second reduction gear 155 are each rotatably supported inside the housing 180 and may rotate, and a bearing 188 may be disposed between the upper end part and lower end part of the first reduction gear 150 and the second reduction gear 155 and the housing 180.

Hereinbelow, with reference to FIG. 5 and FIG. 6, operations of the output shaft 130 in low speed mode and high speed mode will be described.

When the clutch 110 is moved upward, the output shaft 130 may be rotated in low speed mode, and when the clutch 110 is moved downward, the output shaft 130 may be rotated in high speed mode.

First, as illustrated in FIG. 5, in the low speed mode, the clutch up-down movement part 160 (not illustrated in FIG. 5 and FIG. 6) moves the clutch 110 upward. More specifically, the clutch case 162 is moved upward by the up-down movement part 164, thereby moving the clutch 110 engaged to the clutch case 162, upward.

Alternatively, in a state where the clutch up-down movement part 160 is not operating, the rotor shaft gear 120 may be kept in a position pushed upward by the spring 122. That is, normally, the rotor shaft gear 120 is in a raised state due to the spring 122, and when lowering the rotor shaft gear 120, the clutch up-down movement part 160 may be operated, enabling the rotor shaft gear 120 to move downward against the compressive force of the spring 122 due to the downward movement of the clutch 110.

When the clutch 110 is moved upward, the upper end part of the clutch 110 may be engaged to the clutch engagement part 142 of the output shaft gear 140. Additionally, the engagement between the motor shaft engagement part 112 and the upper end part of the motor shaft 102 and the rotor shaft top gear 105 may be disengaged (see FIG. 3). Here, as illustrated in FIG. 6, in a state where the rotor shaft gear 120, which is in contact with the lower end of the clutch and is elastically supported, is moved downward by the clutch 110, the gear-engagement between the rotor shaft gear 120 and the reduction gear 150, 155 is disengaged, but as the clutch 110 moves upward (see FIG. 5), the rotor shaft gear 120 moves upward along the motor shaft 102, enabling gear-engagement between the rotor shaft gear 120 and the second gear train 152 of the first reduction gear 150.

As the clutch 110 moves upward in this manner, the engagement between the rotor shaft top gear 105 and the motor shaft engagement part 112 of the clutch 110 is disengaged, and thus the rotational force of the motor shaft 102 may not be directly transmitted to the output shaft gear 140. Instead, the rotational force of the motor shaft 102 may be transmitted to the reduction gear 150, 155 through the rotor shaft gear 120. The output shaft gear 140 may rotate at a decelerated speed compared to the motor shaft 102 due to the reduction ratio of the first reduction gear 150 and the second reduction gear 155. Therefore, the rotation of the output shaft gear 140 is transmitted to the clutch 110 engaged to the output shaft gear 140 and the output shaft 130 engaged to the clutch 110, enabling the output shaft 130 to rotate at a speed that is decelerated compared to the motor shaft 102 along with the output shaft gear 140.

In contrast, as illustrated in FIG. 6, in the high speed mode, the clutch up-down movement part 160 moves the clutch 110 downward. More specifically, the clutch case 162 is moved downward by the up-down movement part 164, enabling the clutch 110 engaged to the clutch case 162 to move downward.

When the clutch 110 is moved downward, the engagement between the upper end part of the clutch 110 and the clutch engagement part 142 of the output shaft gear 140 may be disengaged. Here, the motor shaft engagement part 112 and the rotor shaft top gear 105 of the upper end part of the motor shaft 102 are engaged, enabling the rotational force of the motor shaft 102 to be directly transmitted to the clutch 110. Here, as the clutch 110 moves downward, the rotor shaft gear 120, which is in contact with the lower end of the clutch 110, moves downward along the motor shaft 102, which may lead to the disengagement of the gear-engagement between the rotor shaft gear 120 and the second gear train 152 of the first reduction gear 150.

As the clutch 110 moves downward in this manner, the rotor shaft top gear 105 and the motor shaft engagement part 112 of the clutch 110 are engaged, enabling the rotational force of the motor shaft 102 to be directly transmitted to the clutch 110, which may then rotate the output shaft 130 engaged to the clutch 110 at high speed. At this point, the gear-engagement between the rotor shaft gear 120 and the reduction gear 150, 155 is disengaged, and the engagement between the upper end part of the clutch 110 and the clutch engagement part 142 of the output shaft gear 140 is disengaged, meaning that the rotational force of the motor shaft 102 is not transmitted to the reduction gear 150, 155 or the output shaft gear 140.

The drive device 100 according to the present disclosure may be used as a drive device 100 for a juicer that crushes and presses materials such as vegetables and fruits at low speed to produce juice, or as a mixer that crushes or mixes materials using high speed rotating blades combined.

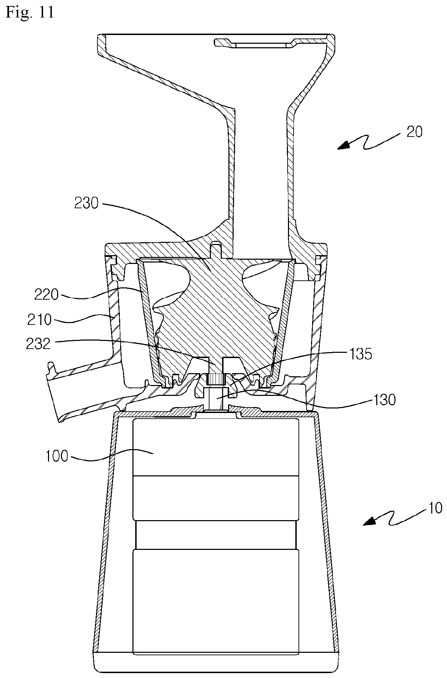

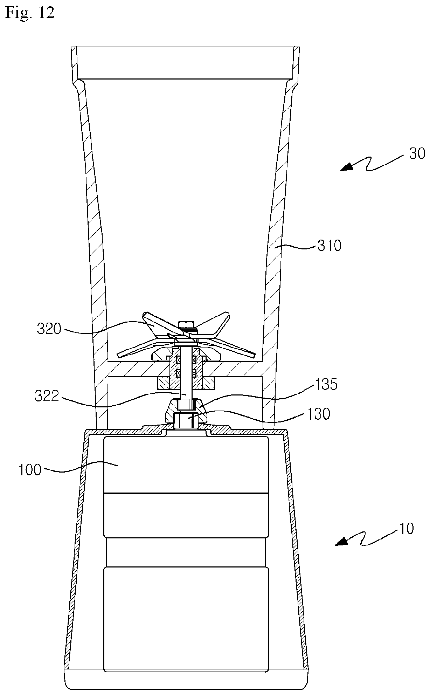

Therefore, on top of the drive device 100 of the present disclosure, a juicing module 20 (see FIG. 11) that includes a screw is mounted, and a rotation shaft of the screw receives power from the output shaft 130 rotating at low speed for use as a juicer, or a mixer module 30 (see FIG. 12) that includes a rotating blade may be replaceably mounted, with a rotation shaft of the rotating blade receiving power from the output shaft 130 rotating at high speed for use as a mixer. Here, the clutch up-down movement part 160 may automatically detect which of the juicing module 20 or the mixer module 30 is mounted on top of the drive device 100 and may automatically move the clutch 110 up-down depending on the type of the upper module.

Hereinbelow, a drive device 100 that rotates a single output shaft 130 at high speed or low speed according to another embodiment of the present disclosure will be described.

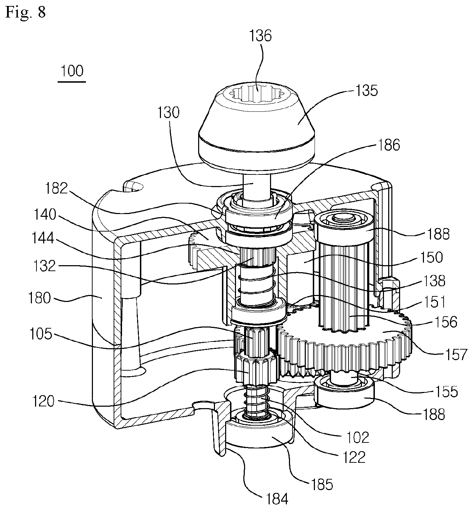

FIG. 7 is a perspective view of a drive device that rotates a single output shaft at high speed or low speed according to another embodiment of the present disclosure, and FIG. 8 is a perspective view illustrating the internal configuration of FIG. 7, and FIGS. 9 and 10 are views illustrating operations in low speed mode and high speed mode, respectively.

A drive device 100 that rotates a single output shaft 130 at high speed or low speed according to another embodiment of the present disclosure may be configured to include a drive motor (not illustrated), a rotor shaft gear 120, an output shaft 130, an output shaft gear 140, and a reduction gear 150, 155.

The rotor shaft gear 120, output shaft 130, output shaft gear 140, and reduction gear 150, 155 constituting the drive device 100 according to the present disclosure may be arranged inside a housing 180 in the same manner as in the aforementioned embodiment, and an upper end part of the output shaft 130 protrudes above the housing 180 through an output shaft through hole 182 in an upper part of the housing 180. In the drawings, the drive motor is placed below the illustrated housing 180 (in the drawings, only the motor shaft 102 that extends above from the drive motor is illustrated as being inside the housing 180), but the drive motor may also be formed to be disposed inside the housing 180 together with the listed components. Further, the drive motor may be arranged inside a different housing that is not illustrated herein besides the illustrated housing 180.

The drive motor may be a rotary motor that generates power for rotating the output shaft 130 at high or low speed. In this embodiment, the drive motor may be a motor that rotates only at high speed without speed adjustment.

The motor shaft 102 of the drive motor may be inserted inside the housing 180 through a motor shaft through hole 184 below the housing 180. A bearing 185 may be disposed between the motor shaft through hole 184 and the motor shaft 102.

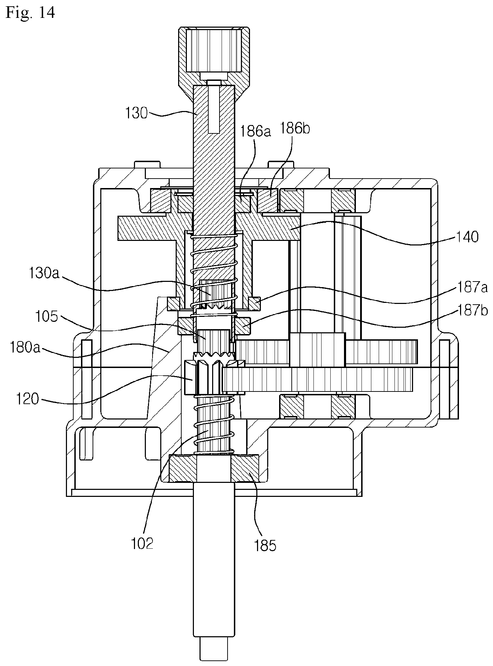

A rotor shaft top gear 105 may be formed on an upper end part of the motor shaft 102. When the output shaft 130 moves up-down, the rotor shaft top gear 105 may engage with or disengage with the output shaft 130, so that, by the rotor shaft top gear 105, the power of the motor shaft 102 is directly transmitted to the output shaft 130 or direct transmission is released. Therefore, on an inner surface of the output shaft 130, a gear train (see FIG. 14, 130a) that is gear-engaged with the rotor shaft top gear 105 may be formed in the circumferential direction. The rotor shaft top gear 105 may be formed integrally with the motor shaft 102 or may be formed separately.

The rotor shaft gear 120 may be inserted into the motor shaft 102 to rotate together with the motor shaft 102 and be elastically supported at a lower part, to move up-down along the motor shaft 102. In order for the rotor shaft gear 120 to move up-down along the motor shaft 102 and rotate together with the motor shaft 102, an inner surface of an insertion hole of the rotor shaft gear 120 may be formed as a polygonal hole and an outer surface of the motor shaft 102 may be formed as a corresponding polygonal shaft. Alternatively, on the inner surface of the insertion hole of the rotor shaft gear 120 and the outer surface of the motor shaft 102, a gear train having an up-down straight line shape may be formed in a circumferential direction, enabling gear-engagement.

Between a lower surface of the rotor shaft gear 120 and the bearing 185, a spring 122 may be disposed to elastically support the rotor shaft gear 120. As will be described later, when the output shaft 130 that moves up-down above the motor shaft 102 moves downward, a lower end of the output shaft 130 contacts with an upper end of the rotor shaft gear 120, enabling the rotor shaft gear 120 to move downward along the motor shaft 102. Here, elastic force may be stored in the spring 122 that supports a lower side of the rotor shaft gear 120. Further, when the output shaft 130 moves upward, the rotor shaft gear 120 may return upward due to the elastic force of the spring 122.

The upper end part of the output shaft 130 protrudes above the housing 180, and a rotation shaft of a rotation mechanism that receives the rotational force of the output shaft 130 may be engaged to the upper end part of the output shaft 130. Here, as illustrated, an output shaft pulley 135 may be engaged to the upper end part of the output shaft 130. A engagement groove 136 may be formed on an upper end the output shaft pulley 135, and into the engagement groove 136, the rotation shaft of the rotation mechanism that rotates by power received from the output shaft 130 may be inserted. The rotation mechanism may, for example, be a rotating blade 320 of the mixer module 30 (see FIG. 12) or a screw 230 of the juicing module 20 (see FIG. 11).

When an upper module that includes the rotation mechanism that rotates by power received from the output shaft 130 is engaged on top of a main body 10 of the drive device 100, a rotation shaft 232, 322 of the rotation mechanism is engaged with the engagement groove 136 of the output shaft pulley 135. The rotation shaft 232, 322 of the rotation mechanism may press the output shaft pulley 135, causing the output shaft 130 engaged to the output shaft pulley 135 to move downward. That is, depending on a lower end position of the rotation shaft 232, 322 of the rotation mechanism included in the upper module that is engaged to the upper part of the drive device 100, the range in which the output shaft pulley 135 is pressed and the output shaft 130 is moved downward may be controlled differently.

As the output shaft 130 moves up-down due to the mounted upper module, the rotor shaft gear 120, which is in contact with the lower end of the output shaft 130, may be moved up-down along the motor shaft 102.

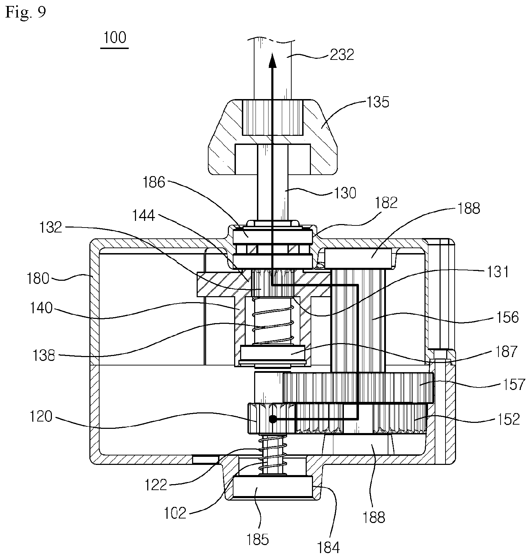

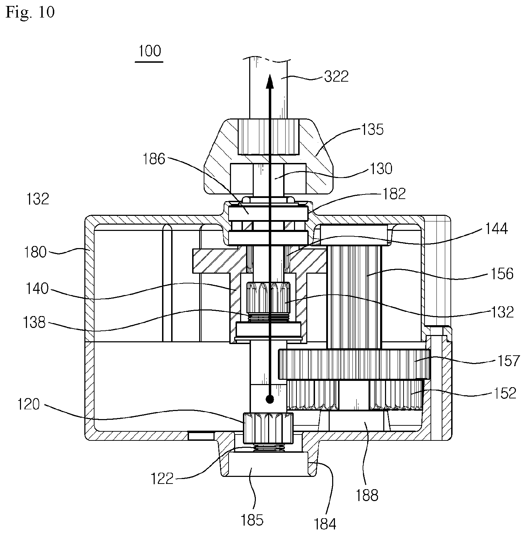

The output shaft gear 140 may be inserted into the output shaft 130 and may rotate. Here, a hollow of the output shaft gear 140 into which the output shaft 130 is inserted may have a diameter step where the lower end part is larger than the upper end part. As illustrated in FIG. 9, the upper end part of this hollow may have an output shaft engagement part 144 formed therein, which engages with an intermediate part of the output shaft 130 when the output shaft 130 moves upward. An intermediate engagement part 132 may be formed at a predetermined position on the intermediate part of the output shaft 130, and a gear train having an up-down straight line shape may be formed along the circumferential direction on the outer surface of the intermediate engagement part 132 and the inner surface of the output shaft engagement part 144, to enable the intermediate engagement part 132 of the output shaft 130 to be inserted into and engage with the output shaft engagement part 144 of the output shaft gear 140 via gear-engagement. As illustrated in FIG. 10, when the output shaft 130 is moved downward, the intermediate engagement part 132 may be positioned at the lower end part of the hollow, thereby disengaging the engagement between the output shaft 130 and the output shaft gear 140. In contrast, when the output shaft 130 moves upward (see FIG. 9), the intermediate engagement part 132 moves upward and is inserted into and engaged to the output shaft engagement part 144, enabling the rotational force of the output shaft gear 140 to be transmitted to the output shaft 130. The output shaft gear 140 may rotate at low speed due to deceleration by the reduction gear 150, 155, which means that the output shaft 130 engaged to the output shaft gear 140 rotates at low speed.

A bearing 187 may be disposed between the output shaft gear 140 and the output shaft 130. As illustrated, the output shaft gear 140 may be formed with a gear train on its upper outer surface that engages with the reduction gear 150, 155, and may be formed such that a hollow extends downward, with the bearing 187 being disposed inside the lower end part of the output shaft gear 140. Further, inside the hollow of the output shaft gear 140, by a spring 138 that is disposed between the bearing 187 and a step 131 on an intermediate part of the output shaft 130, the output shaft 130 may be elastically supported. The output shaft 130 may be moved downward by the upper module mounted above the drive device 100, at which point elastic force may be stored in the spring 138. Here, the output shaft 130 may return upward due to the elastic force stored in the spring 138.

The reduction gear 150, 155 is gear-engaged between the rotor shaft gear 120 and the output shaft gear 140, thereby decelerating the rotational speed of the output shaft gear 140 compared to the rotor shaft gear 120, which engages with the motor shaft 102 and rotates together.

If necessary, in order to adjust the reduction ratio, the reduction gear 150, 155 may be formed as a plurality of reduction gears. In this embodiment, the rotational speed of the motor shaft 102 may be decelerated by two reduction gears, that is, the first reduction gear 150 and the second reduction gear 155.

Since the configuration of the reduction gear composed of the first reduction gear 150 and the second reduction gear 155 is the same as the aforementioned embodiment, a detailed explanation will be omitted.

Hereinafter, operations of the output shaft 130 in low speed mode and high speed mode will be described with reference to FIGs. 9 to 10.

In this embodiment, when the output shaft 130 is positioned upward, the output shaft 130 may be rotated in low speed mode, and when the output shaft 130 is positioned downward, the output shaft 130 may be rotated in high speed mode. More specifically, in a state where the upper module is not engaged to the drive device 100, the output shaft 130 is positioned at an uppermost position due to the elastic force of the spring 138. When the upper module is engaged to the drive device 100, the rotation shaft 232, 322 of the rotation mechanism presses the output shaft pulley 135, moving the output shaft 130 that is engaged to the output shaft pulley 130, downward. Here, the range in which the output shaft 130 moves downward is controlled differently depending on the lower end position of the rotation shaft 232, 322 of the rotation mechanism that presses the output shaft pulley 135. In low speed mode, the distance that the output shaft 130 moves downward is smaller so that it is positioned upward relative to the high speed mode, whereas in high speed mode, the distance that the output shaft 130 moves downward may be greater so that it is positioned downward relative to the low speed mode.

First, as illustrated in FIG. 9, in low speed mode, the output shaft 130 is positioned upward. Here, the range of up-down movement of the output shaft 130 may be controlled according to the lower end position of the rotation shaft 232 of the rotation mechanism included in the upper module mounted on the upper part of the drive device 100. When the rotation shaft 232 of the rotation mechanism is inserted into and engaged with the engagement groove 136 formed on the upper part of the output shaft pulley 135 engaged to the upper end part of the output shaft 130, the output shaft 130 may be pressed, thereby moving the elastically supported output shaft 130 downward by the spring 138. As illustrated in FIG. 9, by shortening the relative length by which the rotation shaft of the rotation mechanism presses the output shaft pulley 135, the output shaft 130 may be positioned upward due to the elastic force of the spring 138.

When the output shaft 130 is positioned upward, the lower end part of the output shaft 130 may be disengaged from the rotor shaft top gear 105. Here, in a state where the rotor shaft gear 120 that is in contact with the lower end of the output shaft 130 and is elastically supported is moved downward by the output shaft 130, the gear-engagement between the rotor shaft gear 120 and the reduction gear 150, 155 is disengaged, but when the output shaft 130 is positioned upward, due to the elastic force of the spring 122, the rotor shaft gear 120 moves upward along the motor shaft 120, enabling the gear-engagement between the rotor shaft gear 120 and the second gear train 152 of the first reduction gear 150.

Further, when the output shaft 130 is positioned upward, the intermediate engagement part 132 of the output shaft 130 may be inserted into and engaged to the output shaft engagement part 144 of the output shaft gear 140, enabling the rotational force of the output shaft gear 140 to be transmitted to the output shaft 130.

In this way, when the output shaft 130 is positioned upward, the engagement between the rotor shaft top gear 105 and the lower end part of the output shaft 130 is disengaged, preventing the rotational force of the motor shaft 102 from being directly transmitted to the output shaft 130. Instead, the rotational force of the motor shaft 102 may be transmitted to the reduction gear 150, 155. The output shaft gear 140 may rotate at a decelerated speed compared to the motor shaft 102 due to the first reduction gear 150 and the second reduction gear 155. The rotation of the output shaft gear 140 is transmitted to the output shaft 130 engaged to the output shaft gear 140, enabling the output shaft 130 to rotate at a decelerated speed corresponding to the rotational speed of the output shaft gear 140.

Conversely, as illustrated in FIG. 10, in high speed mode, the output shaft 130 is moved downward compared to the low speed mode. Compared to the case in FIG. 9, the length by which the rotation shaft 322 of the rotation mechanism included in the upper module mounted on the drive device 100 presses the output shaft pulley 135 is relatively longer, enabling the output shaft 130 to be positioned downward compared to the low speed mode. Here, elastic force may be stored in the spring 138 that supports the output shaft 130.

As illustrated in FIG. 10, when the output shaft 130 is moved downward, the lower end part of the output shaft 130 is engaged with the rotor shaft top gear 105, enabling the rotational force of the motor shaft 102 to be directly transmitted to the output shaft 130. Here, the rotor shaft gear 120, which is in contact with the lower end of the output shaft 130 and is elastically supported, may move downward due to the output shaft 130, leading to disengagement of the gear-engagement between the rotor shaft gear 120 and the reduction gear 150, 155.

Further, as the output shaft 130 moves downward, the engagement between the output shaft engagement part 144 of the output shaft gear 140 and the intermediate engagement part 132 of the output shaft 130 is disengaged, so that when the output shaft 130 rotates, no rotational force is transmitted to the output shaft gear 140, resulting in the output shaft gear 140 not rotating.

In this way, as the output shaft 130 moves downward, the rotor shaft top gear 105 and the lower end part of the output shaft 130 are engaged, enabling the rotational force of the motor shaft 102 to be directly transmitted to the output shaft 130. Here, the gear-engagement between the rotor shaft gear 120 and the reduction gear 150, 155 is disengaged, and the engagement between the output shaft 130 and the output shaft gear 140 is disengaged, resulting in both the reduction gear 150, 155 and the output shaft gear 140 not rotating.

FIG. 11 illustrates a case where a juicer combined with mixer according to an embodiment of the present disclosure is used as a juicer, and FIG. 12 illustrates a case where a juicer combined with mixer according to an embodiment of the present disclosure is used as a mixer.

As illustrated in FIG. 11, when the juicer that may also be used as a mixer according to the present disclosure is used as a juicer, a juicing module 20 that includes a juicing drum 210, a drum 220, a screw 230, and a hopper 240 may be mounted on a main body, which includes the aforementioned drive device 100. The juicing module 20 that constitutes the juicer may be modified into various known forms besides the illustrated forms, and since the detailed configuration of the juicing module 20 is a known configuration, a detailed description will be omitted.

Further, as illustrated in FIG. 12, when the juicer that may also be used as a mixer according to the present disclosure is used as a mixer, a mixer module 30 that includes a mixer drum 310 with a rotating blade 320 mounted inside may be attached to the same main body 10 as illustrated in FIG. 11, enabling it to be used as a mixer. The mixer is known as a device that crushes and mixes the ingredients introduced into the mixer drum 310 by the rapidly rotating blade 320 at the lower end part of the mixer drum 310. In the present disclosure, the meaning of a mixer may be broadly interpreted as a device used for processing ingredients using the rapidly rotating blade 320.

In FIGs. 11 and 12, the drive device 100 according to the aforementioned embodiment with reference to FIGs. 7 to 10 are illustrated. Above the main body 10, the output shaft 130 protrudes upward, and the output shaft pulley 135 is formed on the upper end part of the output shaft 130. When the juicing module 20 is seated on top of the main body 10 as in FIG. 11, the lower rotation shaft 232 of the screw is inserted into and engaged to the engagement groove 136 of the output shaft pulley 135, and when the mixer module 30 is seated on top of the main body 10 as illustrated in FIG. 12, the lower rotation shaft 322 of the rotating blade 320 is inserted into and engaged to the engagement groove 136 of the output shaft pulley 135. Here, depending on the difference in the pressurization lengths between the rotation shaft 232 of the screw and the rotation shaft 322 of the rotating blade, the range in which the rotation shaft 232, 322 presses the output shaft pulley 135 and moving the output shaft 135 downward may vary.

As mentioned above, when the rotation shaft 322 of the rotating blade 320 is engaged to the output shaft pulley 135, causing the output shaft 130 to move downward, the drive device 100 may operate in high speed mode, and if the rotation shaft 232 of the screw 230 is engaged to the output shaft pulley 135 and causes the output shaft 130 to also move downward while being relatively positioned upward, the drive device 100 may operate in low speed mode.

In the following description, various modifications of the aforementioned embodiments will be explained.

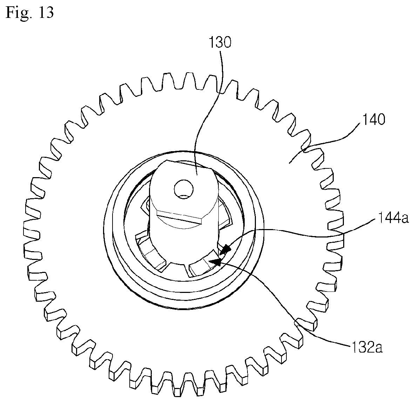

FIG. 13 illustrates an engaged state between the output shaft and the output shaft gear according to another embodiment of the present disclosure. In the present disclosure, 'gear' is not limited to conventional gears (spur gears, helical gears, etc.) where a gear tooth is densely formed in a circumferential direction. While they may be composed of spur gears or helical gears, it suffices if they may transmit power by simply having several key projections and/or key grooves protruding in the circumferential direction. In the illustrated example, four key projections 132a are formed at equal intervals along the circumferential direction, protruding outward radially from the intermediate engagement part 132. Correspondingly, four key grooves 144a are formed at equal intervals along the circumferential direction in the output shaft engagement part 144 as well, inward radially. Alternatively, contrary to this, a key groove may be formed in the intermediate engagement part 132 and a corresponding key projection may be formed on the output shaft engagement part 144.

FIG. 14 illustrates a drive device according to another embodiment of the present disclosure. Hereinbelow, details that are the same as those previously mentioned will be omitted, and only the different aspects presented in this embodiment will be described.

In a power transmission structure leading to the motor shaft 102, the output shaft gear 140, and the output shaft 130, it is important to maintain a robust support state for each component during high speed rotation. To achieve this, in this embodiment, two bearings are arranged to be stacked transversely at the upper inner part of the housing 180. In the illustrated embodiment, the bearings are denoted by reference numerals '186a' and '186b.' By having these two bearings 186a, 186b, the output shaft 130 and the output shaft gear 140 may be robustly supported from the inside and outside. In particular, since the bearings 186a, 186b are installed stacked transversely, there is an effect of achieving a strong support while reducing the internal space of the housing 180.

Additionally, a fixed base 180a, which is integrally formed with the housing 180, is positioned within the housing 180, and a bearing 187a is installed on the fixed base 180a to robustly support the lower part of the output shaft gear 140. Further, a bearing 187b is additionally installed on the fixed base 180a to support the upper part of the motor shaft 102. FIG. 14 illustrates an example where two steps are provided inside the fixed base 180a, with bearings 187a, 187b installed on the upper and lower steps, respectively.

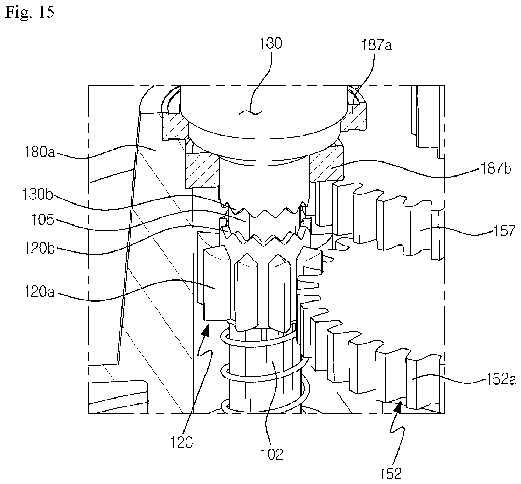

FIG. 15 is an enlarged view of the key part of FIG. 14, illustrating an engaged state between a gear tooth 120a of the rotor shaft gear 120 and a gear tooth 152a of the second gear train 152.

In the present disclosure, by the engagement between the gear tooth formed on the radially outward surface of the rotor shaft top gear 105 and the gear tooth 130a formed on the inner surface of the output shaft 130 (see FIG. 14), the output shaft 130 and the rotor shaft top gear 105 are engaged, thereby directly transmitting the power of the motor shaft 102 to the output shaft 130. However, when the output shaft 130 descends, in order for the gear train 130a on the inner side of the output shaft 130 to move in the shaft direction, and the gear train of the rotor shaft top gear 105 to be inter-inserted to achieve gear-engagement, it is preferable that they are aligned in the circumferential direction. Therefore, in this embodiment, as illustrated, multiple output shaft engagement guides 130b are formed in the shaft direction along the circumferential direction at the lower part of the output shaft 130, and corresponding motor shaft engagement guides 120b are formed in the shaft direction along the circumferential direction on the upper part of the rotor shaft gear 120. Thus, as the output shaft 130 descends, the output shaft engagement guide 130b and the motor shaft engagement guide 120b merge with each other in a sliding manner, allowing the inner gear train 130a of the output shaft 130 and the outer gear train of the rotor shaft top gear 105 to align properly in the circumferential direction, facilitating easy engagement between the two gear trains as the output shaft 130 descends. In the illustrated example, the output shaft engagement guide 130b and the motor shaft engagement guide 120b are illustrated to have multiple peaks and valleys protruding in the shaft direction along the circumferential direction. The valleys adjacent to the peaks exhibit a recessed shape in the shaft direction. The peaks and valleys each formed on the output shaft engagement guide 130b and the motor shaft engagement guide 120b are corresponding shapes that face each other. Thus, from the moment the output shaft 130 descends and meets the motor shaft engagement guide 120b, the peaks and valleys merge in a sliding manner, enabling natural engagement of the output shaft 130 and the motor shaft 102.

This type of structure where peaks and valleys are formed and meet each other may also be applied to the engagement structure between the aforementioned motor shaft engagement part 112 and the rotor shaft top gear 105. In this case, although not illustrated in detail in the drawings, a clutch engagement guide may be formed at the bottom of the clutch 110 in the same manner as described above, with peaks and valleys formed in the shaft direction along the circumferential direction, and a motor shaft engagement guide with peaks and valleys formed in the shaft direction along the circumferential direction may be formed on the upper part of the rotor shaft gear 120.

Meanwhile, in the illustrated embodiment, the gear tooth 120a of the rotor shaft gear 120 and the gear tooth 152a of the second gear train 152 represent a spur gear tooth that has a constant cross-section in the shaft direction. However, when the motor shaft 102 receives a large torque from a drive motor (not illustrated), a phenomenon may occur where the concentricity of the motor shaft 102 cannot be maintained and tilted laterally or be pushed away from the second gear train 152. To prevent this, the gear tooth 120a of the motor shaft and the gear tooth 152a of the second gear train 152 may be formed to be slightly tilted in opposite directions to each other, like helical gears, for example. If the two engaging gear teeth 120a, 152a are tilted up to about 5° with respect to the shaft direction, that is, the shaft line, such problems may be prevented.

The scope of the present disclosure is not limited to the aforementioned embodiments, but may be implemented in various forms within the appended claims. It is understood that anyone with ordinary knowledge in the relevant technical field may modify the present disclosure to a varied range without deviating from the essence of the present disclosure claimed in the claims.

## Claims

1. A drive device that rotates a single output shaft at high or low speed, the drive device comprising:
a drive motor;
a clutch that moves up-down, and when moving downward, is engaged to a rotor shaft top gear formed on a motor shaft of the drive motor, to rotate together with the motor shaft;
an output shaft whose lower end part is engaged to an upper end part of the clutch to rotate together with the clutch;
an output shaft gear that is inserted into the output shaft to rotate, and when the clutch moves upward, is engaged with the clutch to rotate together with the clutch;
a rotor shaft gear that is inserted into the motor shaft to rotate together with the motor shaft, and is elastically supported so that when the clutch moves downward, contacts with the clutch, to move downward; and
a reduction gear that is gear-engaged between the rotor shaft gear and the output shaft gear, to decelerate a rotational speed of the output shaft gear compared to a rotational speed of the motor shaft,
wherein, when the clutch moves downward, the rotor shaft top gear and the clutch are engaged, the gear-engagement between the rotor shaft gear and the reduction gear is disengaged, and the engagement between the output shaft gear and the clutch is disengaged, so that high speed rotation of the motor shaft is transmitted to the clutch and the output shaft, to rotate the output shaft at high speed, and
when the clutch moves upward, the engagement between the rotor shaft top tear and the clutch is disengaged, the rotor shaft gear and the reduction gear are gear-engaged, and the output shaft gear and the clutch are engaged, so that the high speed rotation of the motor shaft is decelerated by the reduction gear, to rotate the output shaft gear and the rotation of the output shaft gear is transmitted to the clutch and the output shaft, to rotate the output shaft at a lower speed than the motor shaft.

2. The drive device that rotates a single output shaft at high or low speed, according to claim 1,
further comprising a clutch up-down movement part that moves the clutch up-down.

3. The drive device that rotates a single output shaft at high or low speed, according to claim 2,
wherein the clutch up-down movement part comprises:
a clutch case that is engaged to the clutch; and
an up-down drive part that is connected to one side of the clutch case, to move the clutch case up-down.

4. The drive device that rotates a single output shaft at high or low speed, according to claim 1,
further comprising a spring that elastically supports a lower side of the rotor shaft gear.

5. The drive device that rotates a single output shaft at high or low speed, according to claim 1,
further comprising a bearing disposed between the output shaft and the output shaft gear.

6. The drive device that rotates a single output shaft at high or low speed, according to claim 1,
further comprising a housing that accommodates therein the drive motor, the clutch, the output shaft gear, the rotor shaft gear, and the reduction gear,
wherein an upper end part of the output shaft protrudes above the housing.

7. The drive device that rotates a single output shaft at high or low speed, according to claim 1,
wherein the reduction gear comprises a first reduction gear that gear-engages with the rotor shaft gear, and a second reduction gear that gear-engages between the first reduction gear and the output shaft gear.

8. The drive device that rotates a single output shaft at high or low speed, according to claim 7,
wherein the first reduction gear and the second reduction gear are formed in two stages, with a first gear train formed on a circumference with a small radius and a second gear train formed on a circumference with a large radius,
the second gear train of the first reduction gear gear-engages with the rotor shaft gear, causing decelerated rotation, and the second gear train of the second reduction gear gear-engages with the first gear train of the first reduction gear, causing decelerated rotation, and the output shaft gear gear-engages with the first gear train of the second reduction gear, causing decelerated rotation.

9. A drive device that rotates a single output shaft at high or low speed, the drive device comprising:
a drive motor;
a rotor shaft gear that is inserted into a motor shaft of the drive motor to rotate together with the motor shaft, and is elastically supported to move up-down;
an output shaft that moves up-down above the motor shaft, and when moving downward, is engaged to a rotor shaft top gear formed on the motor shaft to rotate together with the motor shaft and move the rotor shaft gear downward;
an output shaft gear that is inserted into the output shaft to rotate, and when the output shaft moves upward, is engaged with the output shaft to rotate the output shaft together; and
a reduction gear that is gear-engaged between the rotor shaft gear and the output shaft gear to decelerate a rotational speed of the output shaft gear compared to a rotational speed of the motor shaft,
wherein, when the output shaft moves downward, the output shaft is engaged with the rotor shaft top gear, the gear-engagement between the rotor shaft gear and the reduction gear is disengaged, the engagement between the output shaft and the output shaft gear is disengaged, so that high speed of the motor shaft is transmitted to the output shaft, to rotate the output shaft at high speed, and
when the output shaft moves upward, the output shaft is disengaged from the rotor shaft top gear, the rotor shaft gear and the reduction gear are gear-engaged, and the output shaft and the output shaft gear are engaged, so that the high speed rotation of the motor shaft is decelerated by the reduction gear, to rotate the output shaft gear and the rotation of the output shaft gear is transmitted to the output shaft, to rotate the output shaft at a lower speed than the motor shaft.

10. The drive device that rotates a single output shaft at high or low speed, according to claim 9,
further comprising an output shaft pulley to which, when an upper module that accommodates therein a rotation mechanism that rotates by power received from the output shaft is engaged above the drive device, a rotation shaft of the rotation mechanism is engaged, and that is engaged to an upper end part of the output shaft,
wherein the rotation shaft pressurizes the output shaft pulley to move the output shaft downward.

11. The drive device that rotates a single output shaft at high or low speed, according to claim 10,
wherein a hollow of the output shaft gear to which the output shaft is inserted is formed with a step such that a lower end has a larger diameter than an upper end, and the upper end of the hollow has an output shaft engagement part to which an intermediate engagement part formed on an intermediate part of the output shaft is inserted and engaged when the output shaft moves upward.

12. The drive device that rotates a single output shaft at high or low speed, according to claim 11,
wherein a gear train is formed on an outer surface of the intermediate engagement part and on an inner surface of the output shaft engagement part, or
a key projection or a key groove is formed on the outer surface of the intermediate engagement part, and a key groove corresponding to the key projection formed on the outer surface of the intermediate engagement part or a key projection corresponding to the key groove formed on the outer surface of the intermediate engagement part is formed on the output shaft engagement part.

13. The drive device that rotates a single output shaft at high or low speed, according to claim 9,
further comprising a spring that elastically supports a lower side of the rotor shaft gear.

14. The drive device that rotates a single output shaft at high or low speed, according to claim 9,
further comprising a bearing disposed between the output shaft and the output shaft gear.

15. The drive device that rotates a single output shaft at high or low speed, according to claim 14,
wherein the bearing is disposed on an inner side or outer side of a lower end part of the output shaft gear, and
further comprising a spring that is disposed inside the output shaft gear between the bearing and a step formed on an intermediate part of the output shaft, to elastically support the output shaft.

16. The drive device that rotates a single output shaft at high or low speed, according to claim 9,
further comprising a housing that accommodates therein the drive motor, the output shaft gear, the rotor shaft gear, and the reduction gear,
wherein an upper end part of the output shaft protrudes above the housing.

17. The drive device that rotates a single output shaft at high or low speed, according to claim 9,
wherein the reduction gear comprises a first reduction gear that gear-engages with the rotor shaft gear and a second reduction gear that gear-engages between the first reduction gear and the output shaft gear.

18. The drive device that rotates a single output shaft at high or low speed, according to claim 17,
wherein the first reduction gear and the second reduction gear are formed in two stages, with a first gear train formed on a circumference with a small radius and a second gear train formed on a circumference with a large radius, and
the second gear train of the first reduction gear gear-engages with the rotor shaft gear, causing decelerated rotation, and the second gear train of the second reduction gear gear-engages with the first gear train of the first reduction gear, causing decelerated rotation, and the output shaft gear gear-engages with the first gear train of the second reduction gear, causing decelerated rotation.

19. The drive device that rotates a single output shaft at high or low speed, according to claim 9,
wherein a motor shaft engagement guide having peaks and valleys along a circumferential direction in a shaft direction is formed on an upper part of the rotor shaft gear, and
an output shaft engagement guide having peaks and valleys along a circumferential direction in a shaft direction is formed on a lower part of the output shaft to correspond to the motor shaft engagement guide.

20. The drive device that rotates a single output shaft at high or low speed, according to claim 9,
wherein a gear tooth of the rotor shaft gear and a gear tooth of the reduction gear that is gear-engaged to a gear of the rotor shaft gear are formed to be inclined with respect to a shaft direction.

21. The drive device that rotates a single output shaft at high or low speed, according to claim 20,
wherein the gear tooth of the rotor shaft gear and the gear tooth of the reduction gear that is gear-engaged to the rotor shaft gear have an inclination angle within 5° with respect to the shaft direction.

22. A juicer combined with mixer, comprising:
a drive device according to any one of claims 1 to 21;
a mixer module comprising a rotation blade that rotates at high speed by power received from the output shaft, and that is installed above the drive device; and
a juicing module comprising a screw that rotates at low speed by power received from the output shaft, and that is installed in place of the mixer module above the drive device.
